# EUROPEAN PATENT APPLICATION

(11) **EP 4 507 378 A1**
(43) Date of publication of application: **12.02.2025**
(21) Application number: 23191059.7
(22) Date of filing: 11.08.2023
(51) Int. Cl.: H04W 36/00

(54) **USER EQUIPMENT, BASE STATION, METHOD FOR USER EQUIPMENT, AND METHOD FOR BASE STATION**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, OSAKA, 571-8501 (JP); KUANG, Quan, 63225 Langen (DE)
(74) Representative: Grünecker Patent- und Rechtsanwälte PartG mbB

(57) **Abstract**

Provided are a user equipment, UE, a base station, and corresponding methods for a UE and a base station. The UE comprises a transceiver which, in operation, receives a lower-layer triggered mobility, LTM, candidate configuration, indicating at least one LTM candidate cell, and receives a cell switch command indicating one of the at least one LTM candidate cell as a target cell to be switched to. The UE further comprises circuitry which, in operation, performs an LTM operation to switch from a source cell serving the UE to the target cell according to the cell switch command, and determines whether or not the LTM operation to switch form the source cell to the target cell was successful. If it is determined that the LTM operation to switch from the source cell to the target cell was not successful, the circuitry selects the source cell as a recover cell, or selects one of the at least one candidate recovery cell as a recover cell, the at least one candidate recovery cell including one or more of the at least one LTM candidate cell indicated by the LTM candidate configuration and performs an LTM operation to switch to the selected recovery cell.

## Description

### BACKGROUND

### 1. Technical field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates fast recovery to a target in a case of a cell switch failure.

In an embodiment, a user equipment, UE, comprises a transceiver which, in operation, receives a lower-layer triggered mobility, LTM, candidate configuration, indicating at least one LTM candidate cell, and receives a cell switch command indicating one of the at least one LTM candidate cell as a target cell to be switched to. The UE further comprises circuitry which, in operation, performs an LTM operation to switch from a source cell serving the UE to the target cell according to the cell switch command, and determines whether or not the LTM operation to switch form the source cell to the target cell was successful. If it is determined that the LTM operation to switch from the source cell to the target cell was not successful, the circuitry selects the source cell as a recover cell, or selects one of the at least one candidate recovery cell as a recover cell, the at least one candidate recovery cell including one or more of the at least one LTM candidate cell indicated by the LTM candidate configuration and performs an LTM operation to switch to the selected recovery cell.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: is an illustration of a situation where a cell switch command is transmitted from a base station to a user equipment;
- **Fig. 7**: is a block diagram of a communication system including a user equipment and a base station with their respective structure;
- **Fig. 8a**: is a block diagram illustrating functional structure of the processing circuitry at the user equipment side;
- **Fig. 8b**: is a block diagram illustrating functional structure of the processing circuitry at the base station side;
- **Fig. 9a**: is a flow chart illustrating exemplary steps performed by a user equipment and a base station, where an allowed recovery to the source cell is successful, according to a first embodiment;
- **Fig. 9b**: is a flow chart illustrating exemplary steps performed by a user equipment and a base station, where an allowed recovery to the source cell is not successful, according to the first embodiment;
- **Fig. 9c**: is a flow chart illustrating exemplary steps performed by a user equipment and a base station, where a recovery to the source cell is not allowed, according to the first embodiment;
- **Fig. 10**: is a flow chart illustrating exemplary steps performed by a user equipment and a base station, where an allowed recovery to the source cell is successful and the base station provides a second cell switch command, according to a variation of the first embodiment;
- **Fig. 11**: is a flow chart illustrating exemplary steps performed by a user equipment and a base station, where the user equipment is configured with at least one candidate recovery cell, according to a second embodiment;
- **Fig. 12a**: is a flow chart illustrating exemplary steps performed by a user equipment and a base station, wherein a recovery to the recovery cell is successful, according to the second embodiment;
- **Fig. 12b**: is a flow chart illustrating exemplary steps performed by a user equipment and a base station, wherein a recovery to the recovery cell is not successful, according to the second embodiment;
- **Fig. 13**: is an illustration of an example of a MAC CE serving as a cell switch command including an indication of a recovery cell, according to the second embodiment; and
- **Fig. 14**: is an illustration of exemplary MAC CEs serving as a cell switch command including an indication of a priority order of multiple recovery cells.

### DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

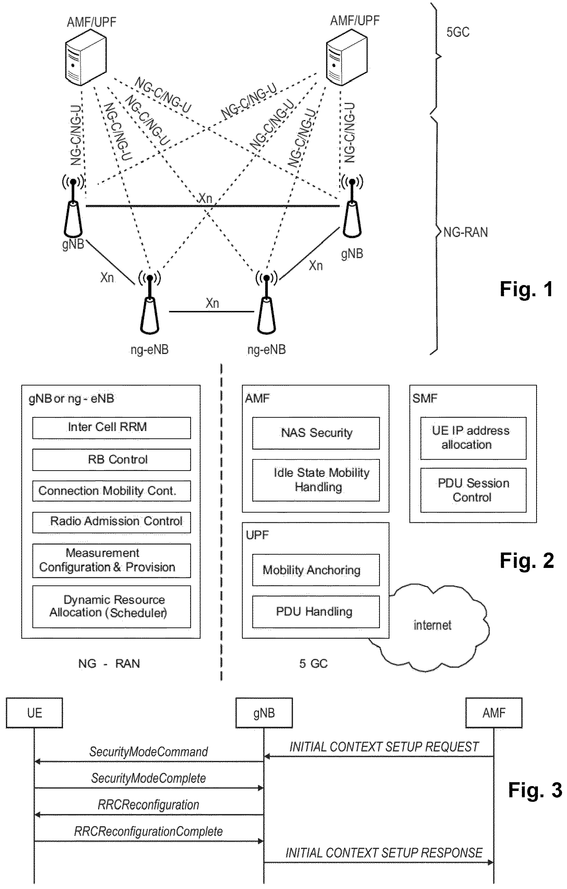

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig.** 2 illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

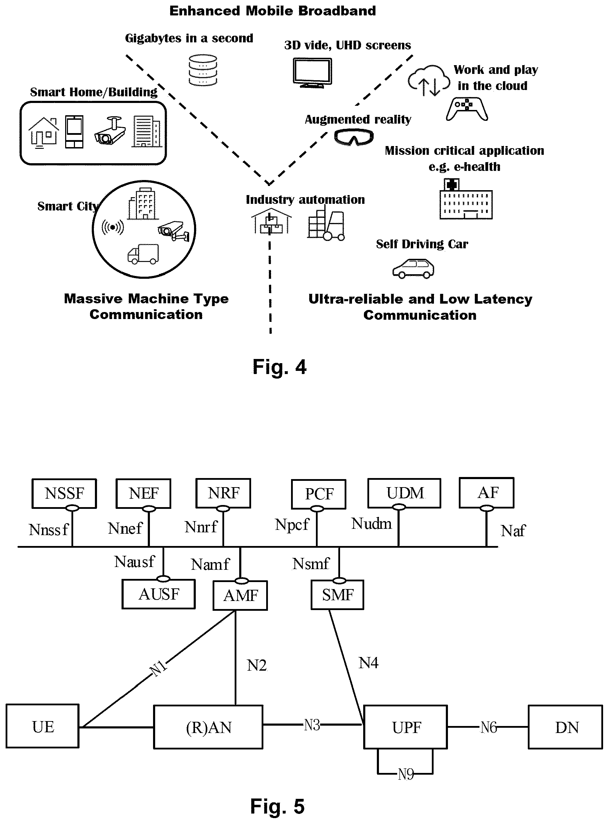

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. **Fig. 4** illustrates some examples of envisioned usage scenarios for IMT for 2020 and beyond (see e.g. ITU-R M.2083 **Fig. 2**).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in **Fig. 4****,** interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Signal-to-Interference-plus-Noise Ratio

SINR, or Signal-to-Interference-plus-Noise Ratio, is a critical metric used to evaluate the quality of a wireless communication link. It assesses the ratio of the desired signal power to the combined interference and noise power. In simpler terms, SINR measures how strong the useful signal is compared to the unwanted signals and background noise present in the communication channel.

In the context of 5G NR, SINR is a key parameter that influences the overall data throughput and reliability of a wireless connection. A higher SINR generally indicates a better signal quality and reduced interference, leading to improved communication performance. SINR is used by both the UE (User Equipment) and the network to make decisions regarding modulation and coding schemes, resource allocation, and other adaptive transmission strategies to ensure optimal data rates and reliable communication.

### L1 measurement

In 5G NR, the communication protocol is divided into different layers, and Layer 1 (L1) refers to the physical layer. L1 measurement involves evaluating the characteristics of the physical signals, including aspects like signal strength, quality, interference, and noise levels. These measurements provide critical information for determining the overall health and performance of the wireless link.

L1 measurements are essential for various purposes, including handover decisions, radio resource management, and quality of service optimization. They help the network make informed decisions about when and how to initiate handovers between different cells, adjust transmission parameters, and manage the allocation of resources.

For instance, when a UE is in connected mode and moving between different cells or sectors, the network uses L1 measurements, including SINR, to assess the quality of the current connection and determine whether a handover is necessary to maintain a seamless and high-quality communication experience. These measurements contribute to ensuring that the UE remains connected to the best available cell with the least interference and the strongest signal.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a scheduling node or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term base station or radio base station here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Frequency Bands

The present disclosure may be applied to any of a licensed band and an unlicensed band.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### HARQ-ACK

HARQ-ACK (Hybrid Automatic Repeat Request - Acknowledgement) is a signaling mechanism used in wireless communication networks to enable error correction and retransmission of data. It allows the receiving device to notify the sending device whether a transmitted packet was successfully received or not, so that the sender can either send the next packet or retransmit the same packet. HARQ-ACK feedback may allow for efficient use of a wireless channel and helps to improve data transmission reliability.

### Reference Signals

In the present disclosure, the reference signals are signals known to both a base station and a UE and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Channel State Information - Reference Signal (CSI-RS)

CSI-RS (Channel State Information Reference Signal) is a signal used in LTE and 5G NR to measure the quality of the wireless channel between the UE and the base station. It may be transmitted periodically by the base station on specific resource elements (resources) in the frequency domain, and the UE uses the received CSI-RS to estimate channel quality, which can be used for beamforming and other techniques. The UE can also use CSI-RS for feedback to the base station, indicating the modulation and coding scheme that can be supported on the current channel. CSI-RS is a component to provide high data rates and reliable communication.

### CSI-RS resource set group

The CSI-RS resource set group is a concept that refers to a group of CSI-RS resource sets with similar transmission characteristics. CSI-RS resource set groups may be used to optimize the transmission efficiency and reduce the overhead associated with individualized control signaling. It may allow the base station to transmit a single CSI-RS resource set for multiple antennas or transmission points, thereby reducing the number of control signals required for beamforming and other transmission optimization techniques.

The CSI-RS resource set group is characterized by a unique identifier, known as the CSI-RS Configuration Index (CRI). The CRI is used by the UE to identify the CSI-RS resource set group and the associated transmission characteristics. The CSI-RS resource set group can be used for a variety of transmission parameters, including beamforming, channel quality measurement, and handover.

### CSI reporting

CSI reporting, e.g. in LTE or 5G NR, is a mechanism by which the UE may provide feedback to the base station about the quality of the radio channel. For this purpose, the UE estimates the channel quality based on the reference signals sent by the base station, and reports this information to the base station.

CSI reporting in 5G NR is more advanced than in LTE and includes a variety of feedback types and reporting configurations. The UE estimates the channel quality based on the reference signals, including the CSI-RS and the DMRS (Demodulation Reference Signal), sent by the base station. The UE then reports this information to the base station using one or more feedback types, such as:
- Periodic CSI feedback: the UE sends CSI feedback at regular intervals specified by the base station.
- Aperiodic CSI feedback: the UE sends CSI feedback when the channel conditions change significantly.
- Semi-persistent CSI feedback: the UE sends CSI feedback periodically with a certain offset, allowing the base station to anticipate when feedback will be received.

The feedback types can be configured with different reporting configurations, which include the number of bits used to encode the feedback, the frequency of feedback reporting, and the aggregation of multiple subcarriers or antennas.

The base station may use the CSI feedback to adapt the transmission parameters, such as the modulation and coding scheme, to the current channel conditions. CSI reporting is a mechanism for achieving high data rates and efficient use of the radio spectrum in 5G NR.

### Power loss estimation

Power loss estimation in 5G NR refers to a mechanism by which the UE estimates the power loss in the radio channel between the UE and the base station. This estimation is important for determining the appropriate transmission power levels to achieve the desired quality of service and minimize interference.

The UE estimates the power loss based on the reference signals, such as the CSI-RS, sent by the base station. The power loss estimation is typically done using the Channel Quality Indicator (CQI) or the Reference Signal Received Power (RSRP), which provide information about the quality of the channel and the received signal strength, respectively.

The power loss estimation may be used by the UE to adjust the transmission power levels and improve the quality of the received signal. The UE can use different power levels for different subcarriers or antenna ports, depending on the estimated power loss.

The base station can also use the power loss estimation to adjust the transmission parameters, such as the beamforming vectors, to improve the quality of the transmitted signal and reduce interference.

Power loss estimation is an important aspect of wireless communication systems like LTE and 5G NR, as it enables efficient use of the radio spectrum and improved quality of service for users.

### Uplink power control

Uplink power control refers to the process of adjusting the transmit power of a UE in the uplink direction, so that the signal received by the base station is neither too weak nor too strong. This is done to ensure efficient use of radio resources and to maintain a target quality of service (QoS) for the UE. The power control can be either open-loop or closed-loop.

In open-loop power control, the UE adjusts its transmit power based on a power control offset without any feedback from the base station. In closed-loop power control, the base station provides feedback to the UE to more accurately adjust the transmit power based on the channel conditions. The closed-loop power control mechanism may be based on the channel quality indicator (CQI) feedback from the base station. The UE uses the CQI to adjust its transmit power to maintain a target signal-to-noise ratio (SNR) at the base station. The CQI feedback is typically sent periodically from the base station to the UE, and the UE adjusts its transmit power based on the most recent CQI value.

### Synchronization and Synchronization Signal Blocks (SSBs)

In NR downlink synchronization, a UE detects the radio boundary (i.e., the timing when a radio frame starts) and OFDM symbol boundary (i.e., the timing when an OFDM symbol starts). This is performed by detecting and analyzing Synchronization Signal Blocks (SSBs). The components of an SSB include synchronization signal, namely a Primary Synchronization Signal (PSS) and a Secondary Synchronization Signal (SSS). The NR SSB may be transmitted in various different patterns, depending on numerology and some other parameters. The pattern is signaled within system information.

In NR, the TRS may be provided as a dedicated RS to a UE or as a common RS for a plurality of UEs in connected mode. Based on the TRS, the UE(s) may be able to perform a finer adjustments of the synchronization, without necessity to always receive the synchronization signal.

In some systems such as NR (e.g. Rel. 15/16), a TRS/CSI resource is configured for a UE to be utilized in measurements, e.g. for channel state estimation, time tracking, frequency tracking, and/or beam tracking, by the UE in RRC_CONNECTED mode. For UEs in other modes, RRC_IDLE and RRC_INACTIVE, such measurements may rely on the SSB. For Rel.17 NR, TRS/CSI-RS may also be used by some INACTIVE/IDLE UEs for time and frequency tracking, who supports this feature of additional TRS/CSI-RS occasions informed to these UEs. Thus, in general, TRS/CSI and SSB are signals that may be used by a UE, in any RRC state, for channel state estimation, time tracking (e.g. time synchronization), frequency tracking, and/or beam tracking.

In general, an SSB may be transmitted in a particular (spatial) direction, in which case the SSB may also be referred to as "SSB beam". In particular, each SSB/SSB beam may also have and/or indicate a beam index (also known as SSB index) that can be used to distinguish said SSB beam from other SSB beams, transmitted in other direction than said SSB beam. A UE may then determine, based on the received signal of the SSB beam, the SSB index of the received SSB beam and determine the direction in which it was transmitted by the base station.

In general, the current SSB structure and signaling in SIB1 may be used, by the base station, to indicate to the UE the SSB beams that the base station is using. The base station may then inform, using an on/off indications, the UE which beams shall be switched on or off during which period of time.

### Medium Access Control Element - MAC CE

In both LTE (Long-Term Evolution) and 5G NR (New Radio), "MAC CE" stands for "Medium Access Control-Control Element." MAC CE is a type of control information used in the MAC (Medium Access Control) layer of the communication protocol. It carries essential instructions and parameters for managing various aspects of the radio interface, including resource allocation, scheduling, power control, and other related functions.

In LTE, the MAC CE is a control element that is used to convey specific commands and information related to the scheduling of resources and other aspects of radio resource management. It is part of a MAC PDU (Protocol Data Unit). Different types of MAC CEs serve different purposes, such as indicating the modulation and coding scheme to be used for data transmission, informing the UE (User Equipment) about the downlink assignment, indicating the power control commands, and more.

Similarly, in 5G NR, MAC CEs are control elements that provide instructions and information for managing various aspects of radio communication. MAC CEs in 5G NR are used to convey control information that influences resource allocation, scheduling, power control, handover, and other critical functions.

In 5G NR, MAC CEs are included within the MAC PDUs and are used to signal various actions and configurations to the UEs. These control elements contribute to the dynamic nature of the 5G network, allowing for efficient utilization of resources and the adaptation of communication parameters based on real-time conditions.

In both LTE and 5G NR, MAC CEs enhance the flexibility, efficiency, and adaptability of the communication system. They enable the network to efficiently manage the available resources, optimize data transmission, and provide a reliable and high-quality connection for users.

### Lower-level triggered mobility (LTM)

In a mobile network, handover (also known as handoff) is the process of transferring an ongoing call or data session from one cell or base station to another without interrupting the communication. This is essential to ensure continuous connectivity as a user moves within the coverage area of a cellular network. Handovers can be triggered for various reasons, such as signal degradation, congestion, load balancing, or UE mobility.

New Radio (NR) supports different types of handover. The basic handover in NR is based on LTE handover mechanism in which network controls UE mobility based on UE measurement reporting. In the basic handover, a source gNB triggers handover by sending handover request to a target gNB and after receiving acknowledgement (ACK) from the target gNB, the source gNB initiates handover by sending a handover command with target cell configuration. The UE accesses the target cell after the target cell configuration is applied.

In the context of 5G New Radio (NR), lower level triggered mobility refers to a mechanism that facilitates the handover process for a mobile device (UE - User Equipment) from one base station (gNB - gNodeB) to another while maintaining a reliable and seamless connection. This mechanism is particularly designed to manage handovers triggered by certain events or conditions that occur at a lower level within the radio network.

Lower-level (e.g. L1/L2) triggered mobility (LTM) is introduced in 5G NR to reduce the latency in a UE mobility procedure and/or to execute a fast cell switch from source cell to a target cell. For this purpose, a list of candidate cells are prepared by a base station and transmitted to a user equipment (UE) that supports LTM. Thereby, the UE is configured with the LTM procedure. This configuration may be performed using an RRC LTMconfig information element (IE).

Subsequently, the UE may perform L1 measurements on the configured LTM candidate cell(s) and transmits lower-layer L1 measurement reports to the base station. Further, the UE may performs channel quality measurements between UE and the source cell and send CSI reports to the base station. Measurement reporting resources for above-described measurement results may be scheduled by the base station as either periodic or aperiodic or semipersistent reporting configurations types to the UE.

The base station then determined whether or not the UE shall switch to a target cell from among the LTM candidate cell(s). If so, a cell switch command is transmitted from the base station to the UE, indicating the target cell to be switched to. For this purpose, a MAC CE may serve as or include the cell switch command.

Once the cell switch command (MAC CE) is received by the UE, an LTM supervisor timer is started by UE. Subsequently, the UE initiates an LTM operation to switch to the indicated target cell and transmits UL data via the target cell. When said UL data is successfully delivered while the LTM supervisor timer has not expired, the UE concludes that the LTM operation to switch from the source cell to the target cell was successful.

In essence, an LTM cell switch operation may be summarized by the following steps. The UE sends a measurement report message to the base station. The base station then decides to use LTM and initiates LTM candidate preparation. For this purpose, the base station transmits an RRC Reconfiguration message to the UE including the configuration of one or multiple LTM candidate target cells. The UE then stores the configuration of LTM candidate target cell(s) and transmits a RRC Reconfiguration Complete message to the base station. The UE may perform downlink (DL) synchronization and timing advance (TA) acquisition with candidate target cell(s) before receiving the LTM cell switch command. The UE performs L1 measurements on the configured LTM candidate target cell(s), and transmits lower-layer measurement reports to the base station. Then, the base station decides to execute LTM cell switch to a target cell, and transmits a MAC control element (MAC-CE) triggering LTM cell switch. The UE switches to the configuration of the LTM candidate target cell. The UE performs random access procedure towards the target cell, if TA is not available. The UE indicates successful completion of the LTM cell switch towards the target cell. In LTM, the UE may perform partial or full MAC reset, may re-establish radio link control (RLC), may perform data recovery with packet data convergence protocol (PDCP) during cell switch.

The cell switch (or handover) procedure may be performed when channel condition of the source cell is poor (and/or not stable) and services given to UE get aggravated, for example, due to declining radio link quality towards the cell edge of the source cell.

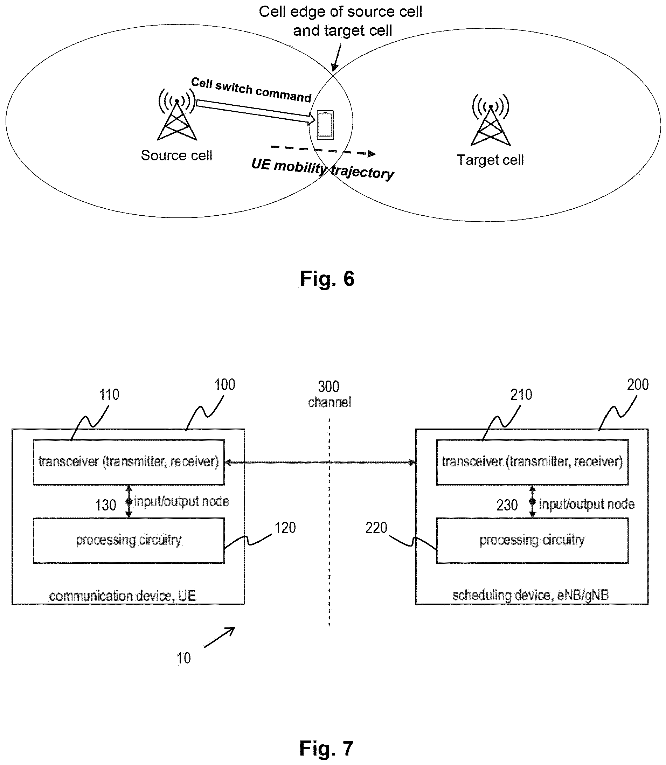

Fig. 6 is an illustration of a situation where a cell switch command is transmitted from a base station to a user equipment. As can be seen from the illustration, a UE that is served by the source cell is located at an edge of a coverage area of said source cell. Based on the measurement results transmitted form the UE to the base station, the base station may decide that the UE should perform an LTM operation to switch form the source cell to a target cell, from among one or more LTM candidate cells configured with the UE. The base station then transmits a cell switch command to the UE, e.g. by transmitting a MAC CE indicating the target cell, in order to trigger the UE to perform the LTM cell switch operation for switching from the source cell to the target cell. Upon reception of the cell switch command, the UE performs the LTM cell switch operation to switch from the source cell to the target cell. As described further above, the UE may determine whether the LTM cell switch operation was successful or not. When the cell switch operation was not successful (i.e. a cell switch failure has occurred), the UE can apply a cell (re)selection process with a neighboring cell for RRC connection re-establishment, to regain cell connectivity.

However, such a cell reselection and connection re-establishment may introduce latency that could result in prolonged data loss. This effect is contrary to the actual purpose of the LTM cell switch procedure. Hence, in the event of a cell switch failure, a fast recovery, that is, a quick selection and connection with another target cell is desirable. This might be achieved by a further LTM execution to switch to a recovery cell.

The present disclosure addresses said problem and provides a user equipment, a base station and corresponding methods that facilitate fast recovery in case of an LTM cell switch failure.

### Embodiments

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion). The present disclosure relates to a UE, a base station and methods of a UE and a base station that address issues related to LTM cell switch failure and quick recovery.

Fig. 7 illustrates a general, simplified and exemplary block diagram of a user equipment 100 (also termed communication device) and a base station 200 which is here exemplarily assumed to be a scheduling device like an eNB or gNB (network node). However, in general, a scheduling device may also be a terminal in case of a sidelink connection between two terminals. Moreover, in particular with respect to the use cases of URLLC; eMBB, and mMTC, the communication device 100 may also be a sensor device, a wearable device, or a connected vehicle, or a controller of an automated machine in an industrial factory. Further, a communication device 200 may be able to function as a relay between base station and another communication device (e.g. the disclosure is not limited to communication "terminals" or user "terminals").

The UE 100 and the base station 200 (eNB/gNB) are communicating with each other over a (wireless) physical channel 300 respectively using their transceivers 110 (UE side) and 210 (base station side). Together, the base station 200 and the UE 100 form the communication system 10. The communication system 10 may further include other entities such as those shown in Fig. 1.

The UE 100 may comprise the transceiver 110 and a (processing) circuitry 120, and the scheduling device 200 may comprise the transceiver 210 and a (processing) circuitry 220. The transceiver 110, 210 in turn may comprise and/or function as a receiver and/or a transmitter. In this disclosure, in other words, the term "transceiver" is used for hardware and software components that allow the US 100, or, respectively base station 200 to transmit and/or receive radio signals over a wireless channel 300. Accordingly, a transceiver corresponds to a receiver, a transmitter, or a combination of receiver and transmitter. Typically, a base station and a UE are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

As shown in **Fig. 7****,** in some embodiments, the user equipment (UE) 100 comprises a transceiver 110 which, in operation, receives a lower-layer triggered mobility, LTM, candidate configuration, indicating at least one LTM candidate cell. The transceiver further receives a cell switch command indicating one of the at least one LTM candidate cell as a target cell to be switched to. The UE 100 further comprises circuitry which, in operation, performs an LTM operation to switch from a source cell serving the UE to the target cell according to the cell switch command, and determines whether or not the LTM operation to switch from the source cell to the target cell was successful. If it is determined that the LTM operation to switch from the source cell to the target cell was not successful, the circuitry selects the source cell as a recovery cell, or selects one of at least one candidate recovery cell as a recovery cell, the at least one candidate recovery cell including one or more of the at least one LTM candidate cell indicated by the LTM candidate configuration, and performs an LTM operation to switch to the selected recovery cell.

In some embodiments, the user equipment (UE) 100 comprises a transceiver 110 which, in operation, receives a lower-layer triggered mobility, LTM, candidate configuration, indicating at least one LTM candidate cell. The transceiver further receives a cell switch command indicating one of the at least one LTM candidate cell as a target cell to be switched to. The UE 100 further comprises circuitry which, in operation, performs an LTM operation to switch from a source cell serving the UE to the target cell according to the cell switch command, and determines whether or not the LTM operation to switch from the source cell to the target cell was successful. If it is determined that the LTM operation to switch from the source cell to the target cell was not successful, the circuitry selects the source cell as a recovery cell and performs an LTM operation to switch to the selected recovery cell.

in some embodiments, the user equipment (UE) 100 comprises a transceiver 110 which, in operation, receives a lower-layer triggered mobility, LTM, candidate configuration, indicating at least one LTM candidate cell. The transceiver further receives a cell switch command indicating one of the at least one LTM candidate cell as a target cell to be switched to. The UE 100 further comprises circuitry which, in operation, performs an LTM operation to switch from a source cell serving the UE to the target cell according to the cell switch command, and determines whether or not the LTM operation to switch from the source cell to the target cell was successful. If it is determined that the LTM operation to switch from the source cell to the target cell was not successful, the circuitry selects one of at least one candidate recovery cell as a recovery cell, the at least one candidate recovery cell including one or more of the at least one LTM candidate cell indicated by the LTM candidate configuration, and performs an LTM operation to switch to the selected recovery cell.

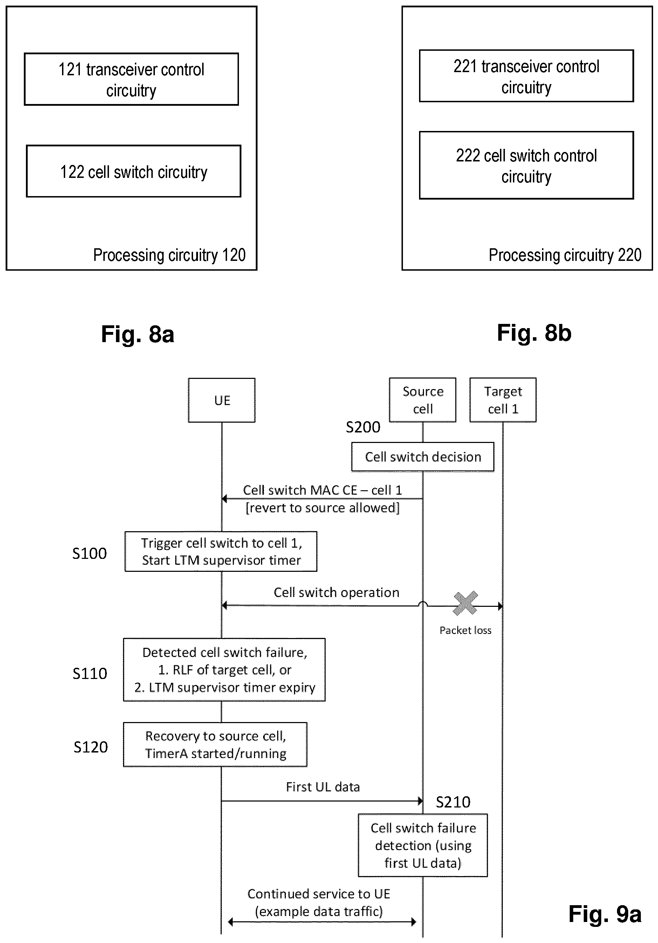

**Fig. 8a** shows a functional structure of the circuitry 120. In particular, it includes a transceiver control circuitry 121. The transceiver control circuitry 121, in operation, controls the transceiver 110 to perform the operations described above. Further, the circuitry 120 includes cell switch circuitry 122 which, in operation, performs the operations of the circuitry 120 as described above.

As also shown in **Fig. 7****,** in some embodiments, the base station comprises a transceiver 220 which, in operation, transmits a lower-layer triggered mobility, LTM, candidate configuration, indicating at least one LTM candidate cell to a user equipment, UE, 100. The base station 200 further comprises circuitry 220 which, in operation, determines whether a user equipment, UE, 100 served by a source cell shall switch to a target cell. If it is determined that the UE 100 shall switch to the target cell, the transceiver 210 transmits a cell switch command indicating one of the at least one LTM candidate cell as a target cell to be switched to.

**Fig. 8b** shows a functional structure of the circuitry 220. In particular, circuitry 220 includes a transceiver control circuitry 221. The transceiver control circuitry 221, in operation, controls the transceiver 210 to perform the operations described above. Further, the circuitry 220 includes cell switch control circuitry 222 which, in operation, performs the operations of the circuitry 220 as described above.

### Circuitries

The circuitries 120, 220 (or processing circuitries) may be one or more pieces of hardware such as one or more processors or any LSIs. Between the transceiver 110, 210 and the processing circuitry 120, 220 there is an input/output point (or node) 130, 230 over which the processing circuitry 120, 220, when in operation, can control the transceiver 110, 210, i.e. control the receiver and/or the transmitter and exchange reception/transmission data. The transceiver 110, 210, as the transmitter and receiver, may include the RF (radio frequency) front including one or more antennas, amplifiers, RF modulators/demodulators and the like. The processing circuitry 120, 220 may implement control tasks such as controlling the transceiver 110, 210 to transmit user data and control data provided by the processing circuitry 120, 220 and/or receive user data and control data that is further processed by the processing circuitry 120, 220. The processing circuitry 120, 220 may also be responsible for performing other processes such as determining, deciding, calculating, measuring, etc. The transmitter may be responsible for performing the process of transmitting and other processes related thereto. The receiver may be responsible for performing the process of receiving and other processes related thereto.

It is noted that the circuitries 120, 220 may be a general processing circuitry including one or more processors which may execute code instructions stored in a memory (which may be also part of the circuitry 120, 220) and which may include portions of the code instructions corresponding to the functionality described above with reference to respective circuitry. The functionality may be provided by hardware adaption and/or by software. The present disclosure is not limited to any particular circuitry and embodiments of the disclosure may include dedicated or programmable hardware or general purpose hardware or any combination thereof.

It is further noted that any of the steps/operations described below may be performed or controlled by the circuitry 120 (on the UE 100 side) and/or the circuitry 220 (on the base station 200 side). In particular, in the further description, the details and embodiments apply to each of the UE 100, the base station 200 and the methods unless explicit statement or context indicates otherwise.

### First embodiment

In the first embodiment, a UE 100 performs an LTM operation to switch to the source cell after an LTM operation to switch to a target cell was not successfully performed. In other words, the UE 100 recovers back to the source cell after occurrence of an LTM cell switch failure.

For this purpose, the UE 100 comprises a transceiver 110 which, in operation, receives a lower-layer triggered mobility, LTM, candidate configuration, indicating at least one LTM candidate cell. The transceiver further receives a cell switch command indicating one of the at least one LTM candidate cell as a target cell to be switched to. The UE 100 further comprises circuitry which, in operation, performs an LTM operation to switch from a source cell serving the UE to the target cell according to the cell switch command, and determines whether or not the LTM operation to switch from the source cell to the target cell was successful. If it is determined that the LTM operation to switch from the source cell to the target cell was not successful, the circuitry selects the source cell as a recovery cell and performs an LTM operation to switch to the selected recovery cell.

In particular, when the base station transmits a cell switch command, e.g. using a MAC CE, the radio link between the source cell and the UE 100 may be sufficient for communication. Said radio link may be considered sufficient when a source cell SINR or signal quality is better than an SINR or signal quality of the target cell. For instance, the SINR/signal quality of the source cell may be better by 1 or 2 dB when the base station 200 determines that the UE 100 is to be switched to the target cell.

In view thereof, the UE 100 recovers to the source cell as a recovery cell after an LTM operation to switch to the target cell was not successful. For communication with the source cell after recovery, DL and UL synchronization characteristics and/or bearer configuration of the source cell, as used by the UE 100 before the (unsuccessful) attempt to switch to the target cell, may be reused after UE 100 has returned back to the source cell. This approach might reduce the need for additional signaling to achieve DL/UL synchronization and/or bearer configuration during recovery.

In other words, when the source cell is selected as the recovery cell, the circuitry 120, in operation, reuses after switching to the source cell selected as the recovery cell, downlink, DL, and uplink, UL, synchronization characteristics and/or bearer configuration applied for transmissions to and receptions from the source cell before the cell switch command is received.

Whether or not an LTM recovery operation to the source cell is allowed may be indicated by the base station 200. That is, the cell switch command may indicate whether or not the selection of the source cell is allowed. Further, the circuitry 120 may select the source cell as the recover cell and perform the LTM operation to switch to the source cell if the cell switch command indicates that selection of the source cell as the recovery cell is allowed. Otherwise, that is if the cell switch command indicates that selection of the source cell as the recovery cell is not allowed, the circuitry 120 may perform a cell selection and Radio Resource Control, RRC, connection re-establishment procedure.

The indication whether or not the source cell may be selected as a recovery cell after cell switch failure may be included in the cell switch command. In other words, a cell switch command may be a cell switch command indicating a cell switch with fast recovery to the source cell or a cell switch command without fast recovery to the source cell.

For example, only when the cell switch command is a cell switch command with fast recovery to the source cell, the US may switch back to the source cell after the LTM operation to switch to the target cell was not successful.

A cell switch command indicating whether or not fast recovery to the source cell is allowed may be implemented by a MAC CE.

For example, MAC CEs with different identities could be used as cell switch commands with/without fast recovery to the source cell. For example, a MAC CE with a certain Logical Channel ID (LCID) may be considered a cell switch command with fast recovery to the source cell. A MAC CE with an LCID different from said certain LCID may be considered a cell switch command without fast recovery to the source cell. In other words, said certain LCID may be used to indicate to the UE 100 that a recovery to the source cell is allowed by the base station 200.

In a further potential implementation, a field of the MAC CE serving as the cell switch command may include a parameter (e.g. "recovery/revert to source" parameter) that indicates whether or not the recovery to the source cell after LTM cell switch failure is allowed. The value of said field might be set to "true", to indicate that recovery to the source cell is allowed, or to "false", to indicate that recovery to the source cell is not allowed. However, the present disclosure is not limited to this particular implementation, and other values may indicate whether recovery to the source cell is/is not allowed.

In a further potential implementation, recovery to the source cell may be set as a default. That is, the MAC CE serving as the cell switch command does not necessarily carry an indication whether recovery to the source cell is/is not allowed. In this case, the UE 100 may always revert to the source cell as the recovery cell after a cell switch failure has occurred when performing the LTM operation to switch to the target cell.

The UE 100 may initiate an LTM supervisor timer upon reception of the cell switch command, and, may determine that cell switch failure has occurred when switching to the target cell, if a synchronization failure occurs, the LTM supervisor timer expires before receiving an UL grant or Physical Uplink Shared Channel, PUSCH, resources, and/or a number of failed transmissions of UL data or Random Access Channel, RACH, message to the target cell exceeds a threshold.

In other words, the UE 100 may conclude that a cell switch failure has occurred when a radio link failure with the target cell occurs, for instance, in the form of a downlink (DL) synchronization failure or there have been a number of failed attempt to transmit UL data (in case of RACH less switching) or RACH messages (in case of RACH-based switching) that exceeds a certain maximum threshold number. Further, it may be determined that a cell switch failure occurred when the LTM supervisor timer expires. This might be the case when the UE 100 awaits PUSCH resources or an uplink (UL) grant for transmitting UL data.

When recovery to the source cell is allowed and the UE 100 has switched back to the source cell, the transceiver 110 may transmit first UL data via the source cell, wherein said first UL data indicates that a failure has occurred when performing the LTM operation to switch to the target cell. Since the UE 100 transmits said first UL data via the source cell rather than via the target cell, the network may interpret transmission of any first UL data via the source cell to indicate a cell switching failure.

In a potential implementation, the first UL data may be an UL CSI report of the source cell. The network may utilize this information for channel evaluation between the source cell and the UE 100. In another implementation, a sounding reference signal, SRS, signal in uplink may be transmitted by the UE 100, which may allow the network to evaluate the latest position of the UE 100 when the UE 100 has recovered to the source cell.

In yet another implementation, a MAC CE having a specific LCID value may be transmitted to indicate a cell switch failure. In this respect, in order to transmit the MAC CE, the UE 100 requires a scheduling request (SR) resource reserved by the source cell. When the base station provides the UE 100 with a scheduling grant or resources for UL transmission, the UE 100 may be triggered to perform L1 measurements, whose results are reported together with UL data. In this way, the latest channel conditions of the LTM candidate cells may be provided to the base station 200, which may utilize said information for determining whether or not the UR 100 should perform an LTM operation to switch to another (or the previous) target cell.

In order to indicate a cell switch failure to the network, the UE 100 may transmit a MAC CE having the LCID as used to indicate the LTM cell switch in uplink. In other words, a MAC CE having the same LCID used for indicating that the UE 100 shall perform a LTM cell switch to the target cell may be used in uplink to indicate that said cell switch could not be performed successfully. As described above, the transmission of a MAC CE may require a scheduling request (SR) resource reserved by the source cell.

In another implementation, an RRC Reconfiguration failure message may be transmitted by the UE via the source cell in order to indicate a cell switch/handover failure. The cell switch operation (i.e. an LTM execution procedure), may be a part of a RRC Reconfiguration procedure, and the cell switch failure detection could be an RRC (or CU) specific operation at the network side, transmitting an RRC message to the network may address the original RRC message as a reply by UE 100.

For a first transmission of UL data to the source cell after a cell switching failure to the target cell has occurred, the UE 100 may be configured with reserved resources, e.g. PUCCH resources for CSI reporting, SRS transmission resources, and/or scheduling request (SR) resources. Said resources may be indicated to the UE 100 by a base station 200 before the cell switch command is transmitted from the base station 200 to the UE 100. In this case, a first transmission of UL data may be performed by the UE 100 via the source cell without performing a RACH procedure.

On the other hand, a RACH-based first transmission may be performed by the UE 100 when no UL resources as detailed above are reserved for the UE 100 at the source cell. In this case, when a RACH message is sent to the source cell on msg3 in order to receive an UL grant from the source cell, said UL grant could be used for performing said first transmission of UL data, which, as detailed above, may indicate that cell switching to the target cell could not be performed successfully.

Once the UE 100, after performing the first transmission to the source cell, receives an acknowledgement of the first transmission to the source cell, it may be concluded that the recovery to the source cell was successful and the recovery operation is completed.

In a potential implementation, a maximum time for performing an LTM operation to switch to the source cell as the recovery cell may be set. For this purpose, a timer ("timerA") with a predetermined or configured runtime may be utilized. When a synchronization with the source cell as the recovery cell fails or an acknowledgement for a first transmission in UL is not received before timerA has expired, the UE 100 may determine that recovery to the source cell was not successful and may perform a cell selection and Radio Resource Control, RRC, connection re-establishment procedure.

In other words, the UE 100 may determine whether or not the LTM operation to switch to the source cell was not successful, and if it is determined that the LTM operation to switch to the source cell was not successful, perform a cell selection and Radio Resource Control, RRC, connection re-establishment procedure.

The timer timerA may be initiated/started after it is determined that the LTM operation to switch to the target cell as indicated in the cell switch command was not successful. For example, timerA may be initiated after expiration of the LTM supervisor timer. With this approach, the determination of whether or not the LTM operation to switch to the target cell was successful and the determination of whether or not recovery to the source cell was successful are independent from each other and are performed sequentially.

On the other hand, in a potential implementation, timerA could be started after the cell switch command is received by the UE and stopped when recovery to the source cell is successfully completed. In this case, the LTM supervisor timer and timerA may be started at the same timing. Said timers may exhibit the same or different runtimes.

In a variation of this implementation, the LTM supervisor timer is used as timerA. That is, a definition of a new timer might not be required, if the LTM supervisor timer acts as timerA. In this case, the LTM supervisor timer may be restarted after it is determined that the LTM operation to switch from the source cell to the target cell was not successful. However, the LTM supervisor timer may not be restarted upon cell switch failure detection.

That is, although the cell switch (the LTM operation to switch to the target cell) and the cell recovery (the LTM operation to switch to the recovery cell, after detection of a failure in the cell switch) are two different operations, a single timer (e.g. the LTM supervisor timer) may be used in a way that said operations are monitored sequentially. This may be achieved by restarting the timer after the cell switch failure has been detected. In another implementation, the timer is not restarted upon cell switch failure detection while the timer is running. In this case, the cell switch and the cell recovery are to be performed within the same runtime of the timer.

On the other hand, different/independent timers may be used as the LTM supervisor timer and timerA. In this case, timerA might be referred to as LTM recovery timer. The definition of separate independent timers may allow for increased flexibility of the implementation of fast recovery in case of a cell switch failure.

Fig. 9a is a flow chart illustrating exemplary steps performed by a user equipment and a base station, where an allowed recovery to the source cell is successful, according to the first embodiment.

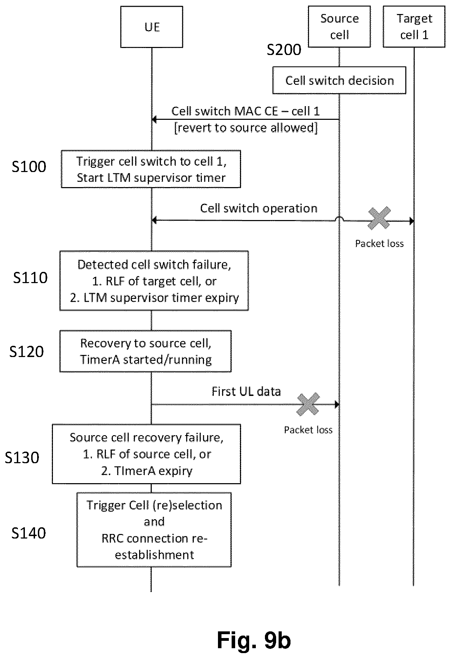

Fig. 9b is a flow chart illustrating exemplary steps performed by a user equipment and a base station, where an allowed recovery to the source cell is not successful, according to the first embodiment.

In Figs. 9a and 9b, steps corresponding to each other are indicated by the same reference numerals.

In step S200, the base station 200 determines that the UE 100 shall perform an LTM operation to switch to a target cell (target cell 1). As detailed above, this determination may be based on CSI reports and L1 measurement results provided by the UE 100. Further, the base station 200 determines that a fast recovery to the source cell shall be allowed to be performed by the UE. Accordingly, the base station 200 transmits a cell switch command, e.g. using a MAC CE as detailed further above, wherein the cell switch command indicates that a recovery to the source cell shall be allowed when the LTM operation to switch to the target cell cannot be concluded successfully. Accordingly, in step S100, the UE 100 initiates the LTM supervisor timer and performs the LTM operation to switch to the target cell. In the illustration of Figs 9a and 9b, a packet loss occurs in the transmission between the UE 100 and the target cell. Accordingly, in step S110, the UE determines that the LTM operation to switch to the target cell could not be concluded successfully. Since the cell switch command indicated that a recovery to the source cell shall be allowed, the UE 100 performs an LTM operation to switch back to the source cell in step S120. For example, timerA may be started. In contrast to the situation illustrated in Fig. 8b, the recovers to the source cell is successful in the situation shown in Fig. 1. That is, in step S210, the base station 200 receives the first UL transmission to the source cell and, accordingly, determines that a cell switch failure occurred in the LTM operation to switch to the target cell. The service is then continued between the source cell and the UE 100. On the other hand, as illustrated in Fig. 9b, recovery to the source cell is not successful. As exemplarily illustrated, a packet transmitted by the UE 100 is lost. Hence, in step S130, the UE 100 determined that recovery to the source cell was not successful, for instance upon expiry of timerA without having received an acknowledgement of the first UL transmission. Thus, in step S140, the UE 100 performs a cell selection and Radio Resource Control, RRC, connection re-establishment procedure.

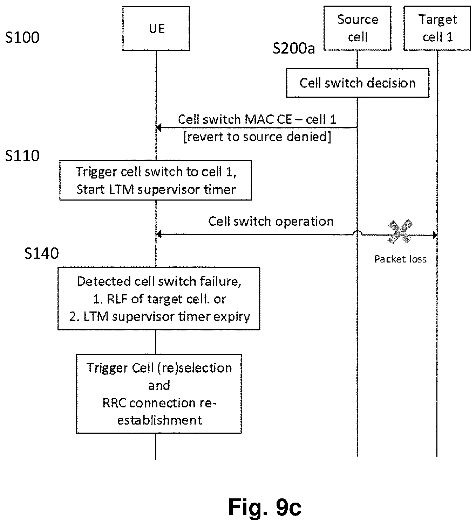

Fig. 9c is a flow chart illustrating exemplary steps performed by a user equipment and a base station, where a recovery to the source cell is not allowed, according to the first embodiment. Step S200a differs from step S200 of Figs. 9a and 9b in that the base station determines that a recovery to the source cell shall not be allowed in the event that the LTM operation to switch from the source cell to the target cell. Accordingly, after having performed the LTM operation in step S100 and having detected that the LTM operation to switch to the target cell failed in step S110, the UE 100 performs a cell selection and Radio Resource Control, RRC, connection re-establishment procedure in step S140.

### Variations

In a variation of the first embodiment, after the UE 100 has successfully performed a recovery to the source cell, for example after step 210 in Fig. 9a, the base station 200 determines that the UE 100 shall perform an LTM operation to switch from the source cell to another target cell (second target cell) different from the former target cell (first target cell). For this purpose, the base station 200 may utilize the information that the LTM operation to switch to the first target cell could not be concluded successfully. Further, as detailed above, the base station 200 may utilize the latest L1 measurement results provided by the UE 100 after recovery to the source cell for the determination of the second target cell. Indicating the second target cell, the base station 200 transmits a second cell switch command, which may be referred to as a supplementary cell switch command.

With this procedure, the network may choose a new target cell (second target cell) utilizing the information on the failed switching to the first target cell. A MAC CE used as the second cell switch command may be of a different type than the MAC CE serving as the cell switch command to switch to the first target cell. Similarly, the supplementary cell switch command may indicate whether or not the UE 100 may (again) recover to the source cell if cell switching to the target cell cannot be completed successfully. The UE 100 may then, accordingly, after cell switch failure, either recover to the source cell or perform a cell selection and Radio Resource Control, RRC, connection re-establishment procedure.

For monitoring whether or not the LTM operation to switch to the second target cell was successful, the UE 100 may initiate a timer, referred to as timerB, Similarly to timerA, timerB may be initiated when the supplementary cell switch command is received by the UE 100 and stopped when switching to the second target cell is completed successfully. However, timerB may be the LTM supervisor timer. That is, the LTM supervisor timer may be restarted when the supplementary cell switch command is received from the base station 200 via the source cell. On the other hand, a separate timer may be defined as timerB for the monitoring of the cell switching operation according to the supplementary cell switch command. Such a timer may be referred to as an LTM supplementary supervisor timer.

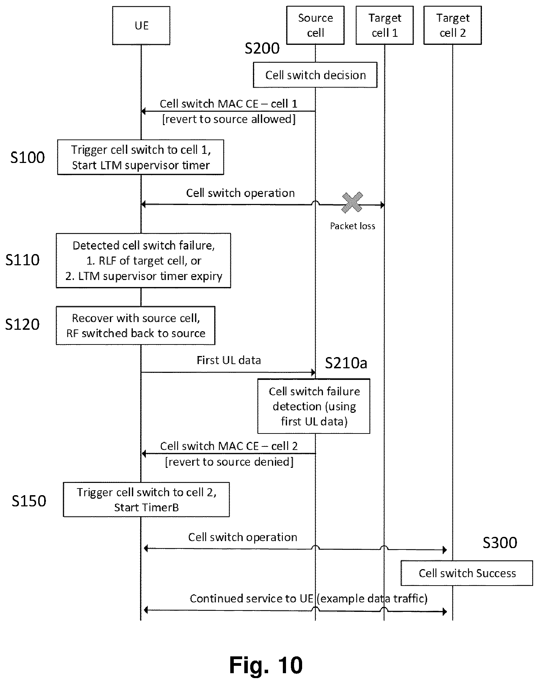

Fig. 10 is a flow chart illustrating exemplary steps performed by a user equipment and a base station, where an allowed recovery to the source cell is successful and the base station provides a supplementary cell switch command, according to a variation of the first embodiment. In the figure, steps corresponding to steps illustrated in Figs. 9a to 9c are indicated with the same reference numerals.

In steps S200 and S100 to S120, operations according to respective steps described for Fig. 9a are performed. That is, the UE 100 receives a cell switch command indicating that recovery to the source cell is allowed in step S100, detects that the LTM operation to switch to the target cell (i.e. target cell 1) was not successful, and recovers to the source cell in step S120. In a first UL transmission, the UE 100 may provide the base station 200 with the latest L1 measurement results, for instance. In step S210a, the base station 200 determines a second target cell the UE 100 is to be switched to, for instance, by utilizing the L1 measurement results. Accordingly, a supplementary cell switch command is transmitted by the base station 200 and received by the UE 100, the supplementary cell switch command indicating target cell 2 as the cell to be switched to. Further, the supplementary cell switch command indicates that recovery to the source cell shall not be allowed. In step S150, the UE 100 performs an LTM operation to switch from the source cell to target cell 2 and, for example, initiates timerB. After successful switching to target cell 2, service is continued between the UE 100 and target cell 2.

It is to be noted that the supplementary cell switch command may indicate that recovery to the source cell shall be allowed. In this case, the UE 100 recovers to the source cell if the LTM operation to switch to target cell 2 cannot be concluded successfully. On the other hand, when recovery to the source cell is not allowed, and the LTM operation to switch to target cell 2 is not successful, the UE may perform a cell selection and Radio Resource Control, RRC, connection re-establishment procedure.

### Second embodiment

In a second embodiment, the UE 100 comprises a transceiver 110 which, in operation, receives a lower-layer triggered mobility, LTM, candidate configuration, indicating at least one LTM candidate cell, and receives a cell switch command indicating one of the at least one LTM candidate cell as a target cell to be switched to. The UE 100 further comprises circuitry 120 which, in operation, performs an LTM operation to switch from a source cell serving the UE to the target cell according to the cell switch command and determines whether or not the LTM operation to switch from the source cell to the target cell was successful. If it is determined that the LTM operation to switch from the source cell to the target cell was not successful, the circuitry 120 selects one of at least one candidate recovery cell as a recovery cell, the at least one candidate recovery cell including one or more of the at least one LTM candidate cell indicated by the LTM candidate configuration, and performs an LTM operation to switch to the selected recovery cell.

In other words, when a cell switch failure has been detected by the UE 100 in the framework of the LTM operation to switch to the target cell, the UE 100 one of the LTM candidates configured by the network as per LTM execution, is used for fast recovery to regain cell connectivity.

This approach may be of particular advantage in a situation where another LTM candidate cell exhibits an SINR/signal quality that is better than the SINR/signal quality of the target cell. The SINR/signal quality may be considered better if it is better by a margin of 1 or 2 dB. For example, when the UE 100 moves to a boundary region of two candidate cells, a cell switch procedure to a target cell indicated by the cell switch command may not be successful, whereas a cell switch to another LTM candidate cell might be successful.

In order to allow the UE 100 to select a recovery cell, the UE 100 may be configured with at least one candidate recovery cell from among the at least one LTM candidate cell. In other words, the transceiver 110 of the UE 100 may receive a recovery configuration indicating the at least one candidate recovery cell from among the at least one LTM candidate cell. It is to be noted that the recovery configuration may indicate only one of the LTM candidate cells, a subset of the LTM candidate cells, or all of the LTM candidate cells as the candidate recovery cells, from which the recovery cell is selected by the circuitry 120 of the UE 100.

With the recovery mechanism as described above according to the present embodiment, the latency of a cell recovery operation may be reduced as compared to a cell (re)selection procedure to the same candidate cell or a neighboring cell.

The recovery configuration, which may be referred to as ConfigA in the following, may be semi-statically configured/transmitted to the UE 100 on an RRC Reconfiguration message. In this case, a value of ConfigA may be set to a sequence of IDs of LTM candidate cells that are indicated to the UE 100 by the LTM candidate configuration. On the other hand, the recovery configuration may be dynamically configured with the UE using a MAC CE transmitted in the framework of the cell switch command. That is, the cell switch command may directly indicate or include an indication of the candidate recovery cells, from which the UE 100 selects the recovery cell for cell recovery after cell switch failure detection for switching to the target cell. ConfigA may also be referred to as LTM recovery config.

ConfigA may be transmitted to the UE 100 together with the LTM configuration at the beginning of the LTM cell switch operation. However, the present disclosure is not limited thereto, and ConfigA may be transmitted separately to the UE 100 before or after the cell switch command is transmitted.

In a situation where the recovery configuration indicates multiple (i.e. more than one) candidate recovery cell, a priority order of the candidate recovery cells may be configured (this configuration may be referred to as ConfigB in the following). ConfigB may be semi-statically configured and sent on an RRC Reconfiguration message, or be dynamically configured using a MAC CE transmitted in the framework of the LTM cell switch procedure. For instance, ConfigB may be indicated by or included in the cell switch command transmitted to the UE 100. In the case of semi-static configuration of ConfigB, a respective value may be set to a sequence of LTM candidate cells (as sent as ConfigA) in an order of priority. ConfigB may also be referred to as an LTM priority order.

ConfigB may be transmitted to the UE 100 either together with ConfigA, i.e. the recovery configuration indicating the LTM candidate cells that serve as candidate recovery cells, or separate from ConfigA. For example, when ConfigB is transmitted separately from ConfigA, it may be transmitted before transmission of the cell switch command or together with the cell switch command. Further, ConfigA and ConfigB may be formed by a single configuration value indicating the candidate recovery cells and the priority order of the candidate recovery cells. In particular, when ConfigA and ConfigB are transmitted together, the candidate recovery cells may be indicated in an order corresponding to the priority order of the candidate recovery cells to be applied by the UE 100. Such a configuration may be referred to as an LTM recovery order.

In a potential implementation, ConfigA and ConfigB, i.e. the list of recovery cells and respective priority order may be combined with the LTM candidate configuration indicating the LTM candidate cells, which might be transmitted on an RRC Reconfiguration message. In this case, the LTM candidate configuration may include a parameter indicating whether or not a respective LTM candidate cell configured to the UE 100 could be used for recovery. Further, the LTM candidate configuration may indicate the priority order of the LTM candidate cells indicated as recovery cells.

In a situation where all LTM candidate cells are intended to serve as candidate recovery cells, all LTM candidate cells may be indicated as candidate recovery cells as described above. This allows for a high degree of flexibility in configuring the candidate recovery cells. However, it could be indicated by the base station 200 that all LTM candidate cells may serve as candidate recovery cells using a dedicated indicator, called ConfigC. The value of ConfigC may be set to "all" although the present disclosure is not limited thereto. Said ConfigC may be transmitted together with or separate from the LTM candidate configuration. In another potential implementation, all LTM candidate cells indicated by the LTM candidate configuration may be set as candidate recovery cells by default. That is, even without receiving an indication of the candidate recovery cells, the UE 100 may consider every LTM candidate cell as a candidate recovery cell, from which the recovery cell is selected.

A cell switch failure may be detected by the UE 100 in the same or similar manner as described for the first embodiment. That is, the circuitry 120 of the UE 100 may initiate an LTM supervisor timer upon reception of the cell switch command, and determine that the LTM operation to switch from the source cell to the target cell was not successful if a synchronization failure occurs, the LTM supervisor timer expires before receiving an UL grant or Physical Uplink Shared Channel, PUSCH, resources, and/or a number of failed transmissions of UL data or Random Access Channel, RACH, message to the target cell exceeds a threshold.

When the UE 100 determines that an LTM operation to switch to a target cell according to a cell switch command was not successful, the UE 100 selects a recovery cell from the at least one candidate recovery cells indicated by ConfigA. If more than one candidate recovery cell is indicated by ConfigA, the selection of the recovery cell may be based on ConfigB, i.e. the priority order of the candidate recovery cells.

That is, when the UE 100 is configured with only one candidate recovery cell, said candidate recovery cell is selected as the recovery cell and an LTM operation to switch to said recovery cell is performed after a cell switch failure to witch to the target cell is detected. When multiple or all of the LTM candidate cells are configured as candidate recovery cells, the UE 100 may select the candidate recovery cell having the highest priority as the recovery cell and performs the LTM operation to switch to said recovery cell. When the cell switch operation to switch to the recovery cell is not successful, the UE 100 may select the candidate recovery cell having the second highest priority as a next recovery cell and perform an LTM operation to switch to said next recovery cell. If this LTM operation is again not successful, the UE 100 may proceed with selecting a next recovery cells and performing respective LTM operations to switch thereto according to the selected recovery cell.

In other words, the UE 100 receives a priority order indicator indicating an order of priority of the plurality of candidate recovery cells and selects the recovery cell from among the plurality of candidate recovery cells according to the priority order. If LTM operations to switch to any of the candidate recovery cells, according to the priority order, are not successful a cell selection and Radio Resource Control, RRC, connection re-establishment procedure may be performed.

However, rather than selecting recovery cell(s) according to the priority order, the UE 100 may perform L1 measurements for all configured candidate recovery cells and select, as a recovery cell, from among the plurality of candidate recovery cells according to a result of the channel state measurements. Similarly to the above, when recovery to the recovery cell is not successful, the UE 100 may select a next recovery cell from the candidate recovery cells according to the results of L1 measurements and perform respective LTM operation. If LTM operations to switch to any of the candidate recovery cells, according to the priority order, are not successful a cell selection and Radio Resource Control, RRC, connection re-establishment procedure may be performed. In particular, the selection process of the recovery cell(s) according the L1 measurement results may be performed when the UE 100 is configured with multiple candidate recovery cells, but not with an order or priority of said candidate recovery cells.

When an UL transmission to a selected recovery cell was successful, that is, when the UE 100 determines that the LTM operation to switch to the selected recovery cell was successful, the cell recovery process is successfully completed.

Similarly to the first embodiment, a timer (timerC) may be utilized for monitoring whether recovery to the recovery cell is successful or not. TimerC, which may be referred to as LTM recovery timer, may be a separate timer having a dedicated runtime, or may be the LTM supervisor timer, as described for the first embodiment. The LTM recovery timer may be started when fast cell recovery with a candidate recovery cell is triggered, and stopped when one of the candidate recovery cells is recovered. In another implementation, the T311 timer may be utilized as TimerC. Details on the T311 timer, which is called RRC connection re-establishment tier, may be found, for instance, in 3GPP TS 38.331 V17.5.0 of June 2023 (T "3rd Generation Partnership Project; Technical Specification Group Radio Access Network; NR; Radio Resource Control (RRC) protocol specification (Release 17)"). With this definition, LTM fast recovery is combined with the RRC connection re-establishment procedure for cell (re)selection.

Similarly to the description for the first embodiment, the UE 100 may perform a RACH-less or a RACH-based transmission of first UL data to the recovery cell. For example, when an UL channel is synchronized at the recovery cell, i.e. the UE 100 is aware of a time advanced (TA) value of the recovery cell, a RACH-less procedure may be performed by the UE 100. On the other hand, when the UE 100 is not aware of the TA value for the recovery cell, a RACH-based transmission may be performed, wherein the UE 100 transmits a RACH message to the recovery cell and acquires the TA value, after which the UL transmission of the first UL data to the recovery cell may be performed.

As the first UL data, an RRC Reconfiguration complete message could be transmitted to the recovery cell. That is, since the LTM recovery candidate cells may be configured to the UE 100 using RRC Reconfiguration message in DL, upon cell recovery, the UE 100 may transmit a RRC Reconfiguration complete message to the recovery cell as a reply in UL to the original RRC message, similarly to what is described in this respect for the first embodiment.

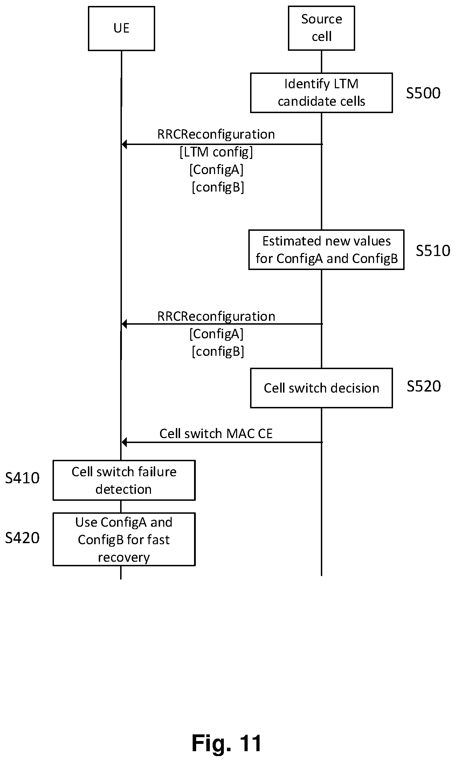

Fig. **11** is a flow chart illustrating exemplary steps performed by a user equipment and a base station, where the user equipment is configured with at least one candidate recovery cell, according to the second embodiment.

In Fig. 11, the UE 100 is served by a base station 200 via the source cell. In step S500, the base station determines LTM candidate cells as well as ConfigA, i.e. the at least one candidate recovery cell, and ConfigB, i.e. the priority order of the at least one candidate recovery cell. It is noted that the base station may determine only one candidate recovery cell. In this case, a determination or a respective priority order is not necessarily required. Similarly, the base station 200 may not determine a priority order even when multiple candidate recovery cells are determined. In this case, the UE 100 may itself determine how a recovery cell may be selected from among the configured candidate recovery cells, for example based on the results of L1 measurements, as detailed further above. The LTM candidate configuration, ConfigA and ConfigB are transmitted from the base station 200 to the UE 100. In step S510, the base station may determine new configurations for ConfigA and ConfigB and transmit said new ConfigA and ConfigB to the UE 100. The described transmission to the UE 100 may be performed on an RRC Reconfiguration message. In step S520, the base station 200 determines that the UE 100 shall perform an LTM operation to switch to a certain target cell and transmits a corresponding cell switch command to the UE 100, for instance using a MAC CE. Upon reception of the cell switch command, the UE 100 performs an LTM operation to switch to the indicated target cell and determines whether or not said LTM operation was successful. Upon cell switch failure detection in step S410, the UE 100 makes use of ConfigA and ConfigB (if configured) to select a recovery cell from the configured candidate recovery cells in step S420 and performs an LTM operation to switch to the selected recovery cell.

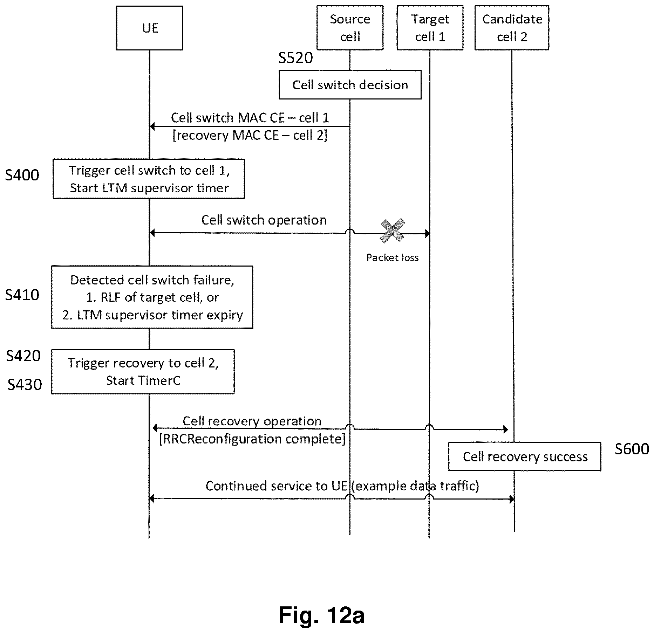

**Fig.** 12a is a flow chart illustrating exemplary steps performed by a user equipment and a base station, wherein a recovery to the recovery cell is successful, according to the second embodiment.

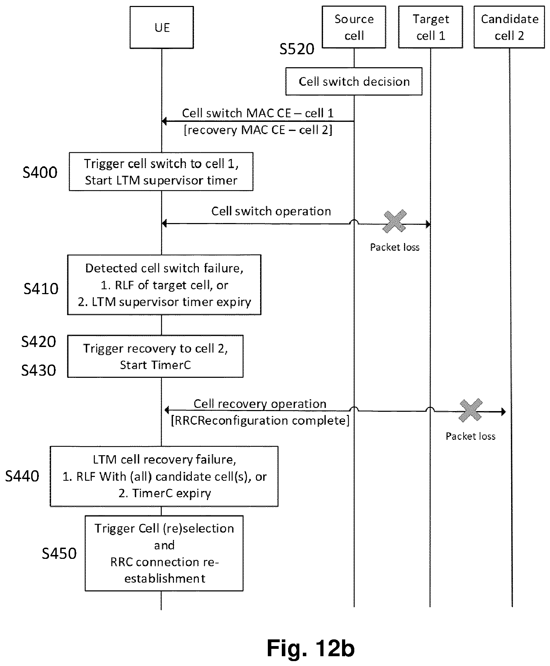

Fig. 12b is a flow chart illustrating exemplary steps performed by a user equipment and a base station, wherein a recovery to the recovery cell is not successful, according to the second embodiment

Figs. 12a and 12b illustrate a situation where the UE 100 is configured with one candidate recovery cell. However, the present disclosure is not limited thereto, and the UE 100 may be configured with multiple candidate recovery cells, as described further above. In Figs. 11, 12a and 12b, the same or corresponding steps are indicated with the same reference numerals.

In step S520, the base station 200 determines that the UE 100 shall perform an LTM operation to switch to a target cell. Further, a candidate recovery cell is determined. A cell switch command is transmitted to the UE 100 indicating the target cell (target cell 1) and a recovery cell (candidate cell 2). The transmission may be performed using a MAC CE. In step S400, the UE 100 performs an LTM operation to switch from the source cell to the target cell indicated in or by the cell switch command and initiates the LTM supervisor timer. Due to the occurrence of packet loss(es), the UE 100 determines in step S410 that the LTM operation to switch to the target cell was not successful. Accordingly, the UE selects the recovery cell as indicated in the cell switch command and performs an LTM operation to switch to the recovery cell in step S420/S430. Upon successful cell recovery in step S600 of Fig. 12a, the service is continued between the UE 100 and the recovery cell, i.e. candidate cell 2. On the other hand, when it is determined that the LTM operation to switch to the recovery cell was not successful in step S440 of Fig. 12b, the UE 100 performs a cell selection and Radio Resource Control, RRC, connection re-establishment procedure in step S450.

As indicated above, configA and configB may be included in a cell switch command using a single MAC CE. In other words, a single cell switch command (MAC CE) may be transmitted to the UE 100, indicating the target cell, at least one candidate recovery cell and, optionally, a priority order of the at least one candidate recovery cell (for instance, if multiple candidate recovery cells are indicated). When the UE 100 receives said MAC CE, an LTM operation to switch to the indicated target cell may be performed and, upon detection of a cell switch failure, a recovery cell may be selected from the at least one candidate recovery cells indicated by the MAC CE and an LTM operation to switch to the selected recovery cell may be performed.

### Variations

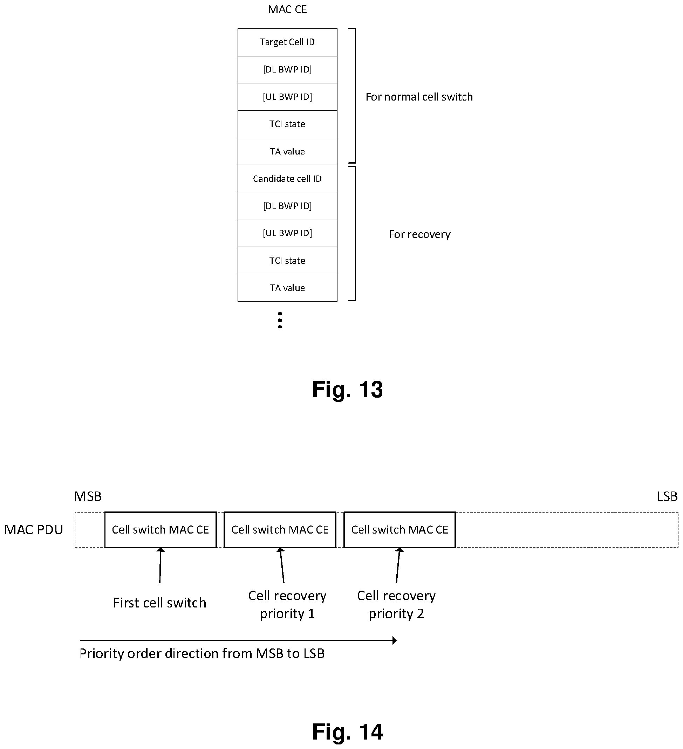

Fig. 13 is an illustration of an example of a MAC CE serving as a cell switch command including an indication of a recovery cell, according to the second embodiment.

The MAC CE indicates a target cell by a target cell ID, a Downlink Bandwidth part ID (DL BWP ID; optional), an Uplink Bandwidth part ID (UL BWP ID; optional), a TCI state indicator and a TA value. Further, the MAC CE indicates a candidate recovery cell by a candidate cell ID, a Downlink Bandwidth part ID (DL BWP ID; optional), an Uplink Bandwidth part ID (UL BWP ID; optional), a TCI state indicator and a TA value. As detailed above, the UE 100 may select the candidate recovery cell as the recovery cell for performing the LTM operation to switch to the recovery cell after a cell switch failure (when switching to the target cell) is detected. Although not illustrated in Fig. 13, the MAC CE may include information on further candidate recovery cells. In this case, the order of the indications of candidate recovery cells may determine a priority order of said candidate recovery cells, that may be used by the UE 100 when selecting the recovery cell from among multiple candidate recovery cells.

Fig. **14** is an illustration of exemplary MAC CEs serving as a cell switch command including an indication of a priority order of multiple recovery cells.

In the illustration of Fig. 14, a MAC Protocol Data Unit (MAC PDU) includes multiple MAC CEs in an order from the most significant bit (MSB) to the lowest significant bit (LSB). Each of the MAC CEs may indicate a cell. Specifically, a first MAC CE may indicate a target cell to which the UE 100 shall switch in the framework of an LTM operation. The following MAC CEs each indicate a candidate recovery cell to be used by the UE 100 for selection of a recovery cell in case the switching to the target cell could not be concluded successfully. In particular, the order of MAC CEs from the MSB to the LSB may indicate the priority order of the candidate recovery cells.

In other words, repeated cell switch MAC CE in the same MAC PDU are used to configure candidate recovery cells, as ConfigA and ConfigB. In comparison to the implementation illustrated in Fig. 14, a modification of a MAC CE definition is not required. When only one candidate recovery cell is indicated in the MAC PDU, a priority order is obviously not required. However, when multiple candidate recovery cells are indicated by respective MAC CEs in the MAC PDU, the order from the MSB to the LSB may indicate the priority order. However, the priority order may be indicated separately, i.e. independent from the order of respective MAC CEs in the MAC PDU.

In an implementation other than the illustrations of Fig. 13 and 14, different types of MAC CEs may be utilized to indicate whether respective MAC CEs relate to in indication of a target cell or to an indication of a candidate recovery cell. In other words, two types of cell switch MAC CEs may be used to differentiate between normal cell switch MAC CE with the target cell and cell switch recovery MAC CE to perform recovery with indicated candidate cell(s).

When the UE 100 receives a cell switch MAC CE indicating a target cell and a cell recovery MAC CE indicating a candidate recovery cell (i.e. configA), the UE 100 may perform the LTM operation to switch o the target cell and, upon detection of a cell switch failure, select a recovery cell from the candidate recovery cells indicated in MAC CEs, and perform an LTM operation to switch to the selected recovery cell. When multiple candidate recovery cells are indicated by respective MAC CEs, an order of priority may be indicated to the UE 100. That is, a MAC CE could be transmitted that indicate the priority order (i.e. configB). The UE 100 may then utilize the priority order for selecting a recovery cell, as described further above.

### Third embodiment

In the third embodiment, a UE 100 comprises a transceiver 110 which, in operation, receives a lower-layer triggered mobility, LTM, candidate configuration, indicating at least one LTM candidate cell, and receives a cell switch command indicating one of the at least one LTM candidate cell as a target cell to be switched to. The UE 100 further comprises circuitry 120 which, in operation performs an LTM operation to switch from a source cell serving the UE 100 to the target cell according to the cell switch command and determines whether or not the LTM operation to switch from the source cell to the target cell was successful. If it is determined that the LTM operation to switch from the source cell to the target cell was not successful, the circuitry 120 selects the source cell or one of at least one candidate recovery cell as a recovery cell, the at least one candidate recovery cell including one or more of the at least one LTM candidate cell indicated by the LTM candidate configuration, and performs an LTM operation to switch to the selected recovery cell.

In other words, the UE 100 selects the recovery cell from among the source cell and the at least one candidate recovery cells. That is, the third embodiment may be considered a combination of the first and the second embodiments. Hence, every aspect described with respect to said first and second embodiment may also apply to the third embodiment.

For example, the UE 100 may be configured with at least one candidate recovery cell as in the second embodiment and, further, the cell switch command may indicate that recovery to the source cell is allowed, as in the first embodiment.

In this scenario, the UE 100 may, after determination that the LTM operation to switch to the target cell was not successful, select the source cell as the recovery cell, if the cell switch command indicates that selection of the source cell as the recovery cell is allowed, and perform respective LTM operation to switch to the source cell. Further, the UE 100 determines whether or not the LTM operation to switch to the source cell as the selected recovery cell is successful. If the LTM operation to switch to the source cell as the recovery cell is not successful, select one of the at least one candidate recovery cell as a next recovery cell, and perform an LTM operation to switch to the selected next recovery cell.

That is, the UE 100 may select the source cell as a recovery cell first and, when switching to the source cell is not successful, select one of the at least one candidate source cells as a next recovery cell to perform a next LTM operation to switch to said next recovery cell. When multiple candidate recovery cells are configured with the UE 100, the UE may apply the operations described for the second embodiment to select the next recovery cell. That is, the next recovery cell (and potentially further next recovery cells, if switching to the recovery cell is not successful) may be selected by applying a priority order of the candidate recovery cells or by using L1 measurement results.

In another implementation, the UE 100 performs channel state measurements of the source cell and the configured at least one candidate recovery cell and selects the recovery cell from among the source cell and the at least one candidate recovery cell according to a result of the channel state measurements. That is, the UE 100 may not select the source cell as a first recovery cell by default, but select the recovery cell using the results of channel state measurement of the source cell and L1 measurements of all candidate recovery cells.

In another implementation where the UE 100 is configured with the source cell and at least one candidate recovery cells, the UE 100 may select the recovery cell according to predetermined conditions. For example, said conditions may be based on SINR/signal quality of the source cell and/or the candidate recovery cells. In an exemplary embodiment, SINR thresholds may be defined for the source cell and/or each of the candidate recovery cells. When the SINR of the source cell exceeds respective threshold value, the UE 100 selects the source cell as the recovery cell. If the SINR of the source cell does not exceed respective threshold, the UE 10 may select a candidate recovery cell, whose SINR value exceeds respective threshold value as the recovery cell, and perform the LTM operation to switch to the selected recovery cell.

In other words, the UE 100 receives a recovery configuration indicating the at least one candidate recovery cell from among the at least one LTM candidate cell and the cell switch command indicates that selection of the source cell as the recovery cell is allowed. In this situation, the UE may select the recovery cell from among the source cell and the at least one candidate recovery cell according to predetermined conditions. Subsequently, the LTM operation to switch to the selected recovery cell may be performed by the UE 100.

As in the first and second embodiment, the UE 100 may initiate an LTM supervisor timer upon reception of the cell switch command, and determine that the LTM operation to switch from the source cell to the target cell was not successful if a synchronization failure occurs, the LTM supervisor timer expires before receiving an UL grant or Physical Uplink Shared Channel, PUSCH, resources, and/or a number of failed transmissions of UL data or Random Access Channel, RACH, message to the target cell exceeds a threshold.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment, UE, is provided. The UE comprises a transceiver which, in operation, receives a lower-layer triggered mobility, LTM, candidate configuration, indicating at least one LTM candidate cell, and receives a cell switch command indicating one of the at least one LTM candidate cell as a target cell to be switched to. The UE further comprises circuitry which, in operation, performs an LTM operation to switch from a source cell serving the UE to the target cell according to the cell switch command and determines whether or not the LTM operation to switch from the source cell to the target cell was successful. If it is determined that the LTM operation to switch from the source cell to the target cell was not successful, the circuitry selects the source cell as a recovery cell, or selects one of at least one candidate recovery cell as a recovery cell, the at least one candidate recovery cell including one or more of the at least one LTM candidate cell indicated by the LTM candidate configuration, and performs an LTM operation to switch to the selected recovery cell.

According to a second aspect, provided is a UE according to the first aspect, wherein the cell switch command indicates whether or not selection of the source cell as the recovery cell is allowed; and the circuitry, in operation, selects the source cell as the recovery cell, if the cell switch command indicates that selection of the source cell as the recovery cell is allowed, and performs a cell selection and Radio Resource Control, RRC, connection re-establishment procedure, if the cell switch command indicates that selection of the source cell as the recovery cell is not allowed.

According to a third aspect, provided is a UE according to the second aspect, wherein when the source cell is selected as the recovery cell, the transceiver, in operation, performs a first UL transmission after switching to the source cell as the recovery cell, the first UL transmission including at least one of an UL Channel State Information, CSI, report, a sounding reference signal, a cell switch failure indicator, and an RRC Reconfiguration failure message.

According to a fourth aspect, provided is a UE according to the second or third aspect, wherein when the source cell is selected as the recovery cell, the circuitry, in operation, reuses after switching to the source cell selected as the recovery cell, downlink, DL, and uplink, UL, synchronization characteristics and bearer configuration applied for transmissions to and receptions from the source cell before the cell switch command is received.

According to a fifth aspect, provided is a UE according to any one of the second to fourth aspect, wherein the circuitry, in operation, determines whether or not the LTM operation to switch to the source cell was not successful, and if it is determined that the LTM operation to switch to the source cell was not successful, performs a cell selection and Radio Resource Control, RRC, connection re-establishment procedure.

According to a sixth aspect, provided is a UE according to the first aspect, the transceiver, in operation, receives a recovery configuration indicating the at least one candidate recovery cell from among the at least one LTM candidate cell.

According to a seventh aspect, provided is a UE according to the sixth aspect, wherein the recovery configuration indicates a single candidate recovery cell; and the circuitry, in operation, selects said single candidate recovery cell as the recovery cell.

According to an eighth aspect, provided is a UE according to the sixth aspect, wherein the recovery configuration indicates a plurality of candidate recovery cells; the transceiver, in operation, receives a priority order indicator indicating an order of priority of the plurality of candidate recovery cells; and the circuitry, in operation, selects the recovery cell from among the plurality of candidate recovery cells according to the priority order.

According to a ninth aspect, provided is a UE according to the sixth aspect, wherein the recovery configuration indicates a plurality of candidate recovery cells; and the circuitry, in operation, performs channel state measurements and selects the recovery cell from among the plurality of candidate recovery cells according to a result of the channel state measurements.

According to a tenth aspect, provided is a UE according to any one of the sixth to ninth aspect, wherein the circuitry, in operation, performs a cell selection and Radio Resource Control, RRC, connection re-establishment procedure, if LTM operations to switch to any of the candidate recovery cells are not successful.

According to an eleventh aspect, provided is a UE according to the first aspect, wherein the transceiver, in operation, receives a recovery configuration indicating the at least one candidate recovery cell from among the at least one LTM candidate cell; the cell switch command indicates that selection of the source cell as the recovery cell is allowed; and the circuitry, in operation, selects the recovery cell from among the source cell and the at least one candidate recovery cell according to predetermined conditions.

According to a twelfth aspect, provided is a UE according to the eleventh aspect, wherein the circuitry, in operation, selects the source cell as the recovery cell, if the cell switch command indicates that selection of the source cell as the recovery cell is allowed, determines whether the LTM operation to switch to the source cell as the selected recovery cell is successful, if the LTM operation to switch to the source cell as the recovery cell is not successful, selects one of the at least one candidate recovery cell as a next recovery cell, and performs an LTM operation to switch to the selected next recovery cell.

According to a thirteenth aspect, provided is a UE according to the eleventh aspect, wherein the circuitry, in operation, performs channel state measurements of the source cell and the at least one candidate recovery cell and selects the recovery cell from among the source cell and the at least one candidate recovery cell according to a result of the channel state measurements.

According to a fourteenth aspect, provided is a UE according to any one of the first to thirteenth aspect, wherein the circuitry, in operation, initiates an LTM supervisor timer upon reception of the cell switch command, and determines that the LTM operation to switch from the source cell to the target cell was not successful if a synchronization failure occurs, the LTM supervisor timer expires before receiving an UL grant or Physical Uplink Shared Channel, PUSCH, resources, and/or a number of failed transmissions of UL data or Random Access Channel, RACH, message to the target cell exceeds a threshold.

According to a fifteenth aspect, provided is a method for a user equipment, comprising receiving a lower-layer triggered mobility, LTM, candidate configuration, indicating at least one LTM candidate cell; receiving a cell switch command indicating one of the at least one LTM candidate cell as a target cell to be switched to; performing an LTM operation to switch from a source cell serving the UE to the target cell according to the cell switch command; determining whether or not the LTM operation to switch from the source cell to the target cell was successful if it is determined that the LTM operation to switch from the source cell to the target cell was not successful, selecting the source cell as a recovery cell, or selecting one of at least one candidate recovery cell as a recovery cell, the at least one candidate recovery cell including one or more of the at least one LTM candidate cell indicated by the LTM candidate configuration, and performing an LTM operation to switch to the selected recovery cell.

According to a sixteenth aspect, provided is a method according to the fifteenth aspect, wherein the cell switch command indicates whether or not selection of the source cell as the recovery cell is allowed; and the method comprises selecting the source cell as the recovery cell, if the cell switch command indicates that selection of the source cell as the recovery cell is allowed, and performing a cell selection and Radio Resource Control, RRC, connection re-establishment procedure, if the cell switch command indicates that selection of the source cell as the recovery cell is not allowed.

According to a seventeenth aspect, provided is a method according to the sixteenth aspect, wherein when the source cell is selected as the recovery cell, a first UL transmission is performed after switching to the source cell as the recovery cell, the first UL transmission including at least one of an UL Channel State Information, CSI, report, a sounding reference signal, a cell switch failure indicator, and an RRC Reconfiguration failure message.

According to a eighteenth aspect, provided is a method according to the sixteenth or seventeenth aspect, wherein when the source cell is selected as the recovery cell, after switching to the source cell selected as the recovery cell, downlink, DL, and uplink, UL, synchronization characteristics and bearer configuration applied for transmissions to and receptions from the source cell before the cell switch command is received are reused.

According to a nineteenth aspect, provided is a method according to any one of the sixteenth to eighteenth aspect, wherein it is determined whether or not the LTM operation to switch to the source cell was not successful, and if it is determined that the LTM operation to switch to the source cell was not successful, a cell selection and Radio Resource Control, RRC, connection re-establishment procedure is performed.

According to a twentieth aspect, provided is a method according to the fifteenth aspect, comprising receiving a recovery configuration indicating the at least one candidate recovery cell from among the at least one LTM candidate cell.

According to a twenty-first aspect, provided is a method according to the twentieth aspect, wherein the recovery configuration indicates a single candidate recovery cell; and said single candidate recovery cell is selected as the recovery cell.

According to a twenty-second aspect, provided is a method according to the twentieth aspect, wherein the recovery configuration indicates a plurality of candidate recovery cells; and the method comprises receiving a priority order indicator indicating an order of priority of the plurality of candidate recovery cells; and selecting the recovery cell from among the plurality of candidate recovery cells according to the priority order.

According to a twenty-third aspect, provided is a method according to the twentieth aspect, wherein the recovery configuration indicates a plurality of candidate recovery cells; and the method comprises performing channel state measurements and selecting the recovery cell from among the plurality of candidate recovery cells according to a result of the channel state measurements.

According to a twenty-fourth aspect, provided is a method according to any one of the twentieth to twenty-third aspect, comprising performing a cell selection and Radio Resource Control, RRC, connection re-establishment procedure, if LTM operations to switch to any of the candidate recovery cells are not successful.

According to a twenty-fifth aspect, provided is a method according to the fifteenth aspect, comprising receiving a recovery configuration indicating the at least one candidate recovery cell from among the at least one LTM candidate cell; wherein the cell switch command indicates that selection of the source cell as the recovery cell is allowed; and comprising selecting the recovery cell from among the source cell and the at least one candidate recovery cell according to predetermined conditions.

According to a twenty-sixth aspect, provided is a method according to the twenty-fifth aspect, wherein the source cell is selected as the recovery cell, if the cell switch command indicates that selection of the source cell as the recovery cell is allowed, it is determined whether the LTM operation to switch to the source cell as the selected recovery cell is successful; if the LTM operation to switch to the source cell as the recovery cell is not successful, one of the at least one candidate recovery cell is selected as a next recovery cell, and an LTM operation to switch to the selected next recovery cell is performed.

According to a twenty-seventh aspect, provided is a method according to the twenty-fifth aspect, comprising performing channel state measurements of the source cell and the at least one candidate recovery cell and selecting the recovery cell from among the source cell and the at least one candidate recovery cell according to a result of the channel state measurements.

According to a twenty-eighth aspect, provided is a method according to any one of the fifteenth to twenty-seventh aspect, comprising initiating an LTM supervisor timer upon reception of the cell switch command, and determining that the LTM operation to switch from the source cell to the target cell was not successful if a synchronization failure occurs, the LTM supervisor timer expires before receiving an UL grant or Physical Uplink Shared Channel, PUSCH, resources, and/or a number of failed transmissions of UL data or Random Access Channel, RACH, message to the target cell exceeds a threshold.

According to a twenty-ninth aspect, a base station is provided. The base station comprises circuitry which, in operation, determines at least one lower-layer triggered mobility, LTM, candidate cell; and a transceiver which in operation, transmits an LTM candidate configuration, indicating at least one LTM candidate cell. The circuitry further determines one of the at least one LTM candidate cell as a target cell a UE is to switch to. The transceiver transmits a cell switch command indicating the target cell.

According to a thirtieth aspect, provided is a base station according to the twenty-ninth aspect, wherein the cell switch command indicates whether or not selection of the source cell as the recovery cell is allowed.

According to a thirty-first aspect, provided is a base station according to the thirtieth aspect, wherein the transceiver, in operation, receives a first UL transmission, the first UL transmission including at least one of an UL Channel State Information, CSI, report, a sounding reference signal, a cell switch failure indicator, and an RRC Reconfiguration failure message.

According to a thirty-second aspect, provided is a UE according to the thirtieth or thirty-first aspect, wherein the circuitry, in operation, reuses after the UE has switched to the source cell selected as a recovery cell, downlink, DL, and uplink, UL, synchronization characteristics and bearer configuration applied for transmissions to and receptions from the source cell before the cell switch command is received.

According to a thirty-third aspect, provided is a base station according to the twenty-ninth, wherein the circuitry, in operation, determines at least one candidate recovery cell from among the at least one LTM candidate cell; and the transceiver, in operation, transmits a recovery configuration indicating the at least one candidate recovery cell from among the at least one LTM candidate cell.

According to a thirty-fourth aspect, provided is a base station according to the thirty-third aspect, wherein the recovery configuration indicates a single candidate recovery cell.

According to an thirty-fifth aspect, provided is a base station according to the thirty-third aspect, wherein the recovery configuration indicates a plurality of candidate recovery cells; the circuitry determines an order of priority of the plurality of candidate recovery cells, and the transceiver, in operation, transmits a priority order indicator indicating the order of priority of the plurality of candidate recovery cells.

According to a thirty-sixth aspect, provided is a base station according to the thirty-third aspect, wherein the recovery configuration indicates a plurality of candidate recovery cells.

According to an thirty-seventh aspect, provided is a base station according to the twenty-ninth aspect, wherein the circuitry, in operation, determines the at least one candidate recovery cell from among the at least one LTM candidate cell; and the transceiver, in operation, transmits a recovery configuration indicating the at least one candidate recovery cell from among the at least one LTM candidate cell; and the cell switch command indicates that selection of the source cell as the recovery cell is allowed.

According to a thirty-eighth aspect, provided is a method for a base station. The method comprises determining at least one lower-layer triggered mobility, LTM, candidate cell; transmitting an LTM candidate configuration, indicating at least one LTM candidate cell; determining one of the at least one LTM candidate cell as a target cell a UE is to switch to; and transmitting a cell switch command indicating the target cell.

According to a thirty-ninth, provided is a method according to the thirty-eighth aspect, wherein the cell switch command indicates whether or not selection of the source cell as the recovery cell is allowed.

According to a fortieth aspect, provided is a method according to the thirty-ninth aspect, comprising receiving a first UL transmission, the first UL transmission including at least one of an UL Channel State Information, CSI, report, a sounding reference signal, a cell switch failure indicator, and an RRC Reconfiguration failure message.

According to a forty-first aspect, provided is a UE according to the thirty-ninth or fortieth aspect, comprising reusing, after the UE has switched to the source cell selected as a recovery cell, downlink, DL, and uplink, UL, synchronization characteristics and bearer configuration applied for transmissions to and receptions from the source cell before the cell switch command is received.

According to a forty-second aspect, provided is a base station according to the thirty-eighth aspect, comprising determining at least one candidate recovery cell from among the at least one LTM candidate cell; and transmitting a recovery configuration indicating the at least one candidate recovery cell from among the at least one LTM candidate cell.

According to a forty-third aspect, provided is a base station according to the forty-second aspect, wherein the recovery configuration indicates a single candidate recovery cell.

According to a forty-forth aspect, provided is a base station according to the forty-second aspect, wherein the recovery configuration indicates a plurality of candidate recovery cells; the method comprises determining an order of priority of the plurality of candidate recovery cells; and transmitting a priority order indicator indicating the order of priority of the plurality of candidate recovery cells.

According to a forty-fifth aspect, provided is a base station according to the forty-second aspect, wherein the recovery configuration indicates a plurality of candidate recovery cells.

According to a forty-sixth aspect, provided is a base station according to the thirty-eighth aspect, comprising determining the at least one candidate recovery cell from among the at least one LTM candidate cell; and transmitting a recovery configuration indicating the at least one candidate recovery cell from among the at least one LTM candidate cell; wherein the cell switch command indicates that selection of the source cell as the recovery cell is allowed.

Summarizing, provided are a user equipment, UE, a base station, and corresponding methods for a user equipment and a base station. The UE comprises a transceiver which, in operation, receives a lower-layer triggered mobility, LTM, candidate configuration, indicating at least one LTM candidate cell, and receives a cell switch command indicating one of the at least one LTM candidate cell as a target cell to be switched to. The UE further comprises circuitry which, in operation, performs an LTM operation to switch from a source cell serving the UE to the target cell according to the cell switch command, and determines whether or not the LTM operation to switch form the source cell to the target cell was successful. If it is determined that the LTM operation to switch from the source cell to the target cell was not successful, the circuitry selects the source cell as a recover cell, or selects one of the at least one candidate recovery cell as a recover cell, the at least one candidate recovery cell including one or more of the at least one LTM candidate cell indicated by the LTM candidate configuration and performs an LTM operation to switch to the selected recovery cell.

## Claims

1. A user equipment, UE, comprising
a transceiver which, in operation,
receives a lower-layer triggered mobility, LTM, candidate configuration, indicating at least one LTM candidate cell, and
receives a cell switch command indicating one of the at least one LTM candidate cell as a target cell to be switched to; and
circuitry which, in operation,
performs an LTM operation to switch from a source cell serving the UE to the target cell according to the cell switch command;
determines whether or not the LTM operation to switch from the source cell to the target cell was successful;
if it is determined that the LTM operation to switch from the source cell to the target cell was not successful,
selects the source cell as a recovery cell, or selects one of at least one candidate recovery cell as a recovery cell, the at least one candidate recovery cell including one or more of the at least one LTM candidate cell indicated by the LTM candidate configuration, and
performs an LTM operation to switch to the selected recovery cell.

2. The UE according to claim 1, wherein
the cell switch command indicates whether or not selection of the source cell as the recovery cell is allowed; and
the circuitry, in operation,
selects the source cell as the recovery cell, if the cell switch command indicates that selection of the source cell as the recovery cell is allowed, and
performs a cell selection and Radio Resource Control, RRC, connection re-establishment procedure, if the cell switch command indicates that selection of the source cell as the recovery cell is not allowed.

3. The UE according to claim 2, wherein
when the source cell is selected as the recovery cell, the transceiver, in operation, performs a first UL transmission after switching to the source cell as the recovery cell, the first UL transmission including at least one of an UL Channel State Information, CSI, report, a sounding reference signal, a cell switch failure indicator, and an RRC Reconfiguration failure message.

4. The UE according to claim 2 or 3, wherein
when the source cell is selected as the recovery cell, the circuitry, in operation, reuses after switching to the source cell selected as the recovery cell, downlink, DL, and uplink, UL, synchronization characteristics and bearer configuration applied for transmissions to and receptions from the source cell before the cell switch command is received.

5. The UE according to any one of claims 2 to 4, wherein
the circuitry, in operation,
determines whether or not the LTM operation to switch to the source cell was not successful, and
if it is determined that the LTM operation to switch to the source cell was not successful, performs a cell selection and Radio Resource Control, RRC, connection re-establishment procedure.

6. The UE according to claim 1, wherein
the transceiver, in operation, receives a recovery configuration indicating the at least one candidate recovery cell from among the at least one LTM candidate cell.

7. The UE according to claim 6, wherein
the recovery configuration indicates a single candidate recovery cell; and the circuitry, in operation, selects said single candidate recovery cell as the recovery cell.

8. The UE according to claim 6, wherein
the recovery configuration indicates a plurality of candidate recovery cells;
the transceiver, in operation, receives a priority order indicator indicating an order of priority of the plurality of candidate recovery cells; and
the circuitry, in operation, selects the recovery cell from among the plurality of candidate recovery cells according to the priority order.

9. The UE according to claim 6, wherein
the recovery configuration indicates a plurality of candidate recovery cells; and the circuitry, in operation, performs channel state measurements and selects the recovery cell from among the plurality of candidate recovery cells according to a result of the channel state measurements.

10. The UE according to any one of claims 6 to 9, wherein
the circuitry, in operation, performs a cell selection and Radio Resource Control, RRC, connection re-establishment procedure, if LTM operations to switch to any of the candidate recovery cells are not successful.

11. The UE according to claim 1, wherein
the transceiver, in operation, receives a recovery configuration indicating the at least one candidate recovery cell from among the at least one LTM candidate cell;
the cell switch command indicates that selection of the source cell as the recovery cell is allowed; and
the circuitry, in operation, selects the recovery cell from among the source cell and the at least one candidate recovery cell according to predetermined conditions.

12. The UE according to claim 11, wherein
the circuitry, in operation,
selects the source cell as the recovery cell, if the cell switch command indicates that selection of the source cell as the recovery cell is allowed,
determines whether the LTM operation to switch to the source cell as the selected recovery cell is successful,
if the LTM operation to switch to the source cell as the recovery cell is not successful, selects one of the at least one candidate recovery cell as a next recovery cell, and
performs an LTM operation to switch to the selected next recovery cell.

13. The UE according to claim 11, wherein
the circuitry, in operation, performs channel state measurements of the source cell and the at least one candidate recovery cell and selects the recovery cell from among the source cell and the at least one candidate recovery cell according to a result of the channel state measurements.

14. The UE according to any one of claims 1 to 13, wherein the circuitry, in operation,
initiates an LTM supervisor timer upon reception of the cell switch command, and
determines that the LTM operation to switch from the source cell to the target cell was not successful if
a synchronization failure occurs,
the LTM supervisor timer expires before receiving an UL grant or Physical Uplink Shared Channel, PUSCH, resources, and/or
a number of failed transmissions of UL data or Random Access Channel, RACH, message to the target cell exceeds a threshold.

15. A method performed by a user equipment, UE, comprising
receiving a lower-layer triggered mobility, LTM, candidate configuration, indicating at least one LTM candidate cell;
receiving a cell switch command indicating one of the at least one LTM candidate cell as a target cell to be switched to;
performing an LTM operation to switch from a source cell serving the UE to the target cell according to the cell switch command;
determining whether or not the LTM operation to switch from the source cell to the target cell was successful;
if it is determined that the LTM operation to switch from the source cell to the target cell was not successful,
selecting the source cell as a recovery cell, or selecting one of at least one candidate recovery cell as a recovery cell, the at least one candidate recovery cell including one or more of the at least one LTM candidate cell indicated by the LTM candidate configuration, and
performing an LTM operation to switch to the selected recovery cell.
